(19) Europäisches Patentamt

European Patent Office

Office européen des brevets

(11) **EP 1 511 230 A1**

(12) **EUROPEAN PATENT APPLICATION**

(43) Date of publication:
**02.03.2005 Bulletin 2005/09**

(51) Int Cl.7: **H04L 12/56**

(21) Application number: **03019469.0**

(22) Date of filing: **28.08.2003**

| (84) Designated Contracting States: **AT BE BG CH CY CZ DE DK EE ES FI FR GB GR HU IE IT LI LU MC NL PT RO SE SI SK TR** Designated Extension States: **AL LT LV MK** | (71) Applicant: **SIEMENS AKTIENGESELLSCHAFT** **80333 München (DE)** (72) Inventor: **De Vega Rodrigo, Miguel** **81737 München (DE)** |
| --- | --- |

(54) **Method for determining an average packet rate of incoming packets in a node of a network, wherein said incoming packets are aggregated to a burst**

(57) An average burst rate (abr) and a number of packets per burst (ppb) are measured and the average packet rate (apr) is determined by the product of the average burst rate (abr) and the number of packets per burst (ppb).

## FIG 3

EP 1 511 230 A1

**Description**

The invention refers to a method as cited in the preamble in one of claims 1 to 11, respectively.

In networks, like Optical Burst-Switched (OBS) networks or optical networks, packets, e.g. Internet Protocol (IP) packets, Asynchrony Transfer Mode (ATM) cells or protocol data units (PDUs), are aggregated to bursts, like electrical or optical bursts, in order to be transferred through the network. The conversion of packets into bursts takes place in a node, like an edge node, of the network according to a certain aggregation strategy. The solutions so far provide two main aggregation strategies: the aggregation strategy with timeouts and the aggregation strategy with buffer limit.

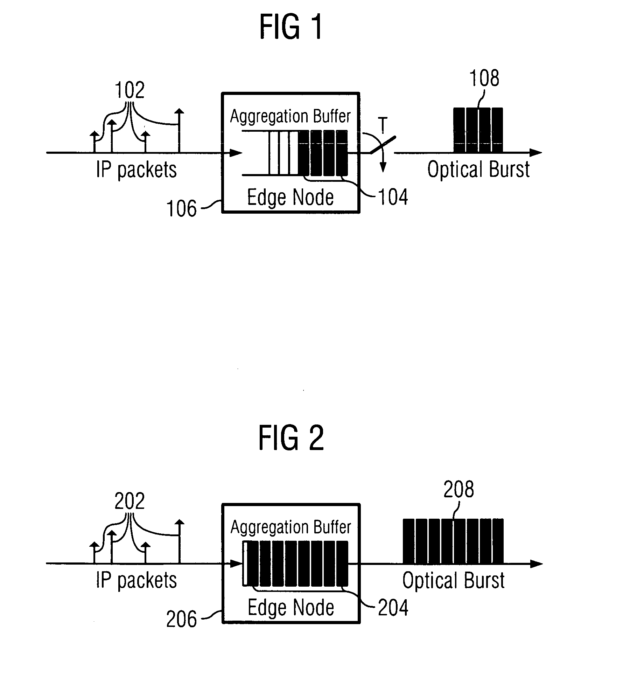

A schematic example of the aggregation strategy with timeouts is shown in Figure 1. In this scheme, packets 102 are added or padded to a burst 104 which is being generated in a buffer 106 until a certain timer T expires. Then the burst 108 is sent.

The aggregation strategy with buffer limit will be discussed with reference to Figure 2. In this scheme, packets 202 are added or padded to a burst 204 which is being generated in a buffer 206 until the buffer is full. Then the burst 208 is sent.

Another aggregation strategy with so called random selection is proposed in a parallel application of the applicant. In this aggregation strategy every incoming packet is assigned with a binary digit, with a certain probability for the first and the second value of the binary digit. All incoming packets are aggregated to a burst and a packet with a first value marks a transition between bursts. This means, it marks the beginning of a new burst and/or the end of a burst of aggregated packets.

Beyond there is the aggregation strategy with slotted aggregation. This aggregation strategy is similar to the aggregation strategy with buffer limit.

Once the packets are transformed into bursts and sent into the network, they travel in the network through a series of switches, like electrical or optical switches, depending on the network, to a certain destination. At best, these switches have limited storage capabilities, e.g. in case of optical switches fiber delay lines, and at worst, no storage capabilities at all in the normal case. Therefore, collisions among bursts occur.

One of the main advantages of burst switched networks, like Optical-Burst Switching networks, is their flexibility. For instance the ability to adapt and change the configuration parameter according to traffic load changes. In order to do this, it is necessary to monitor the traffic load in the nodes, in order to generate parameters to control an aggregation strategy in the node, to avoid collisions among bursts and to achieve an optimal throughput in the network. Therefore a reliable and efficient measure of the traffic load is needed.

Essential parameters of the traffic load are the packet arrival rate and the packet size, or at least the average packet arrival rate and the average packet size.

In case, IP packets are used, the average IP packet size does not need to be measured. The tri-modal IP packet size distribution can be used. This can be considered to be load-independent. According to this, the main problem is to measure the packet arrival rate.

The most obvious method would be to monitor directly the packet arrival rate. However, due to the short inter-arrival times between successive packets this would lead to a high load in the CPU of the node and to a high amount of measured data to be processed, which consumes a high number of storage resources.

It is an object of the invention to find an easy solution to determine the average packet rate of incoming packets.

This object is achieved by the features recited in the claims 1 until 11, respectively.

With the inventive method a measurement at the burst level is done. Through this measurement the values at the packet level are determined.

The advantages of the invention are as follows:

- Measuring at the burst level is technologically less challenging and cheaper, since bursts are usually composed by hundreds of packets and therefore the sampling rate is reduced by the same factor.
- Less CPU and storage resources are needed, since less information has to be processed.
- The solution is extremely simple to implement.
- Measuring at the burst level is more reliable. When the burst inter arrival time is measured, the small variations in the packet inter arrival time are summed up and averaged.
- The nodes can react fast enough to traffic load variations, since the smallest unit of information in the network is the burst.
- The method is compatible with all known burst aggregation strategies.
- It allows to determine an unbiased and consistent estimate of the average packet rate respectively the inter arrival time between packets.

Further developments of the invention are identified in subclaims.

In an embodiment of the invention, where packets are aggregated according to an aggregation strategy with random selection only one parameter has to be measured. Either an average burst rate or the time between the beginning of two successive bursts is measured. With one of these parameters and a parameter from the aggregation strategy the average packet rate can be determined. This has the advantage of a very easy determination of the average packet rate and other parameters, like an inter arrival time, and therefore of the average load.

In a further embodiment of the invention, where packets are aggregated according to an aggregation strategy with buffer limit only one parameter has to be measured. Either an average burst rate or the time between the beginning of two successive burst has to be measured. With one of these parameters and parameters from the aggregation strategy the average packet rate can be determined. This has the advantage of a very easy determination of the average packet rate and other parameters, like an inter arrival time, and therefore of the average load.

In another embodiment of the invention, where packets are aggregated according to an aggregation strategy with timeout only one parameter has to be measured. At least one of the following parameters has to be measured: an average burst rate, the number of packets per burst or the time between the beginning of two successive burst. With one of these parameters and a parameter from the aggregation strategy the average packet rate can be determined. This has the advantage of a very easy determination of the average packet rate and other parameters, like an inter arrival time, and therefore of the average load. Also, it is very easy to determine an approximation of the average burst rate with the aggregation strategy with timeout.

In a development of the invention an update of a stored inter arrival time by a new determined value is down using update parameters, where the first update parameter is inversely proportional to the average number of packets per burst. The second parameter is determined by the value one minus the first parameter, where both parameters are in the range between 0 and 1,0. This has the advantage, that the determined values are updated in dependence of the number of samples respectively packets (per burst). This makes the updated value of the inter arrival time less vulnerable to traffic load variations.

The inventor found out, that it is easier to measure at the "burst side" of a node of a network to determine the traffic load, whereby at the node incoming packets, like data packets, are aggregated according to a certain aggregation strategy to a burst and the burst is transmitted over the network to a certain destination. There the burst is terminated and the packets are sent to further destinations in for example a packed oriented communication network. These packets are e.g. transmitted from a source over a first packet oriented network to a node, where they are aggregated to a burst, the burst is sent over a second network to another node, where the burst is terminated, and the packets are sent to a destination in a third network. In this case, the nodes are edge nodes between two networks. In a first case for an arbitrarily aggregation strategy the average burst rate abr and the number of packets per burst ppb are measured. Then the average packet rate apr is determined by the product of the average burst rate abr and the number of packets per burst ppb. See the following equation.

$$apr = abr \bullet ppb \qquad \text{Equation 1}$$

In a second case for an arbitrarily aggregation strategy the time between the beginning of two successive sent bursts tbb and the number of packets per burst ppb are measured. The average packet rate apr is determined by the quotient of the average number of packets per burst ppb and the average time between the beginning of two successive bursts tbb. See the following equation.

$$apr = \frac{ppb}{tbb} \qquad \text{Equation 2}$$

For an aggregation strategy with random selection, wherein an aggregated packet marks the end of a burst or the beginning of a new burst with a probability P, only the average burst rate abr is measured. The average packet rate apr is determined by the average burst rate abr divided by the probability P.

$$apr = \frac{abr}{P} \qquad\qquad \text{Equation } 3$$

For an aggregation strategy with random selection, where the time between the beginning of two successive bursts tbb is measured, the average packet rate apr is determined by the reciprocal value of the product of the probability P and the time between the beginning of two successive bursts tbb.

$$apr = \frac{1}{P \bullet tbb} \qquad\qquad \text{Equation } 4$$

In case the incoming packets are aggregated according to an aggregation strategy with buffer limit to a burst, where said buffer has a buffersize bs and the packets have an average packet size aps, only the average burst rate abr or the time between the beginning of two successive bursts tbb is needed to be measured.

In case, the average burst rate abr is measured, the average packet rate apr is determined by the quotient of two terms, where the first term respectively dividend is the product of the buffer size bs and the average burst rate abr and the second term respectively divisor is the average packet size aps.

$$apr = \frac{bs \bullet abr}{aps} \qquad\qquad \text{Equation } 5$$

In case, the time between the beginning of two successive bursts tbb is measured, the average packet rate apr is determined by the quotient of the buffer size bs divided by the product of the average packet size aps and the time between the beginning of two successive bursts tbb.

$$apr = \frac{bs}{aps \bullet tbb} \qquad\qquad \text{Equation } 6$$

If the incoming packets of a node are aggregated according to an aggregation strategy with timeout to a burst and the aggregating burst is sent after expiring of a timeout time T into the network, at least a parameter out of a number of parameters has to be measured, to determine the average packet rate.
If the number of packets per burst ppb is measured, an approximated average packet rate aapr can be determined by the quotient of the number of packets per burst ppb and the time T.

$$aapr = \frac{ppb}{T} \qquad\qquad \text{Equation}$$

$$\text{7}$$

As well, the average packet rate apr can be determined by a quotient, where the dividend is the number of packets per burst ppb minus a first constant a, which is in the range between 0,5 and 1,5 and where a preferred value of 1,0 should be used, and where the divisor is the time T.

$$apr = \frac{ppb - a}{T} \qquad \text{Equation 8}$$

$$apr = \frac{ppb - 1}{T} \qquad \text{Equation 9}$$

If the average burst size abs is measured, an approximated average packet rate aapr is determined by the quotient of the average burst size abs divided by the product of the average packet size aps and the timeout time T.

$$apr = \frac{abs}{aps \bullet T} \qquad \text{Equation 10}$$

If the time between the beginning of two successive bursts tbb is measured, the average packet rate apr is determined by the reciprocal value of the difference of the time between the beginning of two successive bursts tbb minus the time T.

$$apr = \frac{1}{tbb - T} \qquad \text{Equation 11}$$

In case, the average burst rate abr is measured, the average packet rate apr is determined by the reciprocal value of a difference, where the minuend is the inverse value of the average burst rate abr and the subtrahend is the time T.

$$apr = \frac{1}{\dfrac{1}{abr} - T} \qquad \text{Equation 12}$$

An inter arrival time iat between incoming packets is determined by the reciprocal value or the average packet rate apr as determined according to one of the above mentioned formulas.

$$iat = \frac{1}{apr} \qquad \text{Equation 13}$$

According to this formula, the inter arrival time iat, which is the time between the beginning of two successive packets, can be determined as the quotient of the time between the beginning of two successive bursts tbb and the number of packets per burst ppb.

$$iat = \frac{tbb}{ppb} \qquad \text{Equation 14}$$

To determine the accuracy of the measurement, the mean square error e can be determined by a quotient, where the dividend is the square of the inter arrival time iat and the divisor is the number of packets per burst ppb.

$$e = \frac{(iat)^2}{ppb} = \frac{1}{ppb \bullet (apr)^2} \qquad \text{Equation 15}$$

When in a node of a network an inter arrival time iat between incoming packets is periodically measured or determined according to equation 13 or 14 and a stored average value iat of an old inter arrival time iat has to be periodically updated by a new inter arrival time iat', this should be done through a summation of two terms, where the first term is a product of the old inter arrival time iat and a first update parameter up1 and the second term is a product of the new inter arrival time iat' and a second update parameter up2.

$$iat = up1 \bullet iat + up2 \bullet iat' \qquad \text{Equation 16}$$

The second update parameter up2 should be determined by the value one minus the first update parameter up1, where said update parameters up1, up2 are in the range between 0 and 1,0.

$$up2 = 1 - up1 \qquad \text{Equation 17}$$

And therefore:

$$iat = up1 \bullet iat + (1 - up1) \bullet iat' \qquad \text{Equation 18}$$

The value of the first update parameter up1 should be inverse proportional to the average number of packets per burst ppb.

$$up1 \approx \frac{1}{ppb} \qquad \text{Equation}$$

The method can be used to aggregate IP packets to bursts. If used in an optical burst switched network, the bursts are transformed and sent as optical burst. The node, where the aggregation takes place are then edge nodes of said optical burst switched network.
If a slotted aggregation strategy is used, the same formulas as for the aggregation strategy with buffer limit can be used.
An exemplary embodiment of the invention is described below with reference to a drawing.

Shown in the drawing are:

FIG 1 the initially cited prior art, using the aggregation strategy with timeout,

FIG 2 the initially cited prior art, using the aggregation strategy with buffer limit

FIG 3 an outline of the architecture of an edge node using the inventive method.

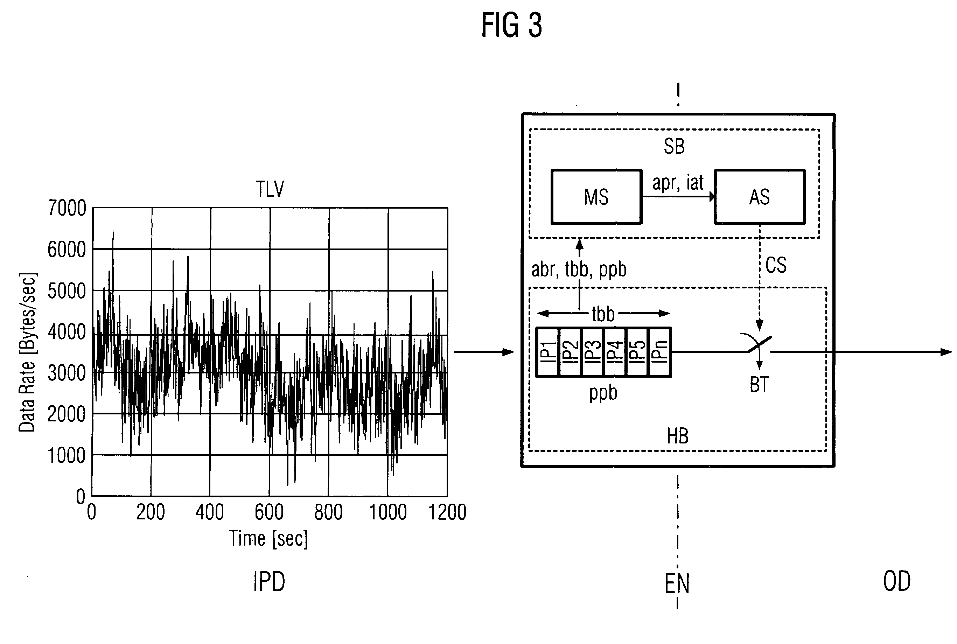

Figure 3 shows an edge node EN which contains a hardware block HB and a software block SB. The hardware block HB receives incoming IP packets IP1, ..., IPn from an internet network or an internet domain IPD, where the IP packets have a certain traffic load variation TLV. The incoming IP packets IP1, ..., IPn are aggregated in the hardware block HB of the edge node EN, for instance in a buffer, to form a burst with a number of packets per burst ppb and a time between the beginning of two successive bursts tbb. The time between the beginning of two successive bursts tbb is measured, e.g. with the help of a timer. Depending on the used aggregation strategy in the edge node possibly a second parameter has to be measured, e.g. the number of packets per burst ppb.

The measured values, e.g. the time between the beginning of two successive bursts tbb and the number of packets per burst ppb, are transmitted from the hardware block HB to the software block SB. The software block SB contains at least a monitoring software MS and an aggregation strategy software AS. The monitoring software MS receives the measured values, that is the time between the beginning of two successive bursts tbb and the number of packets per burst ppb and calculates, according to the above mentioned formulas, the average packet rate apr and/ or the inter arrival time iat and sends these values to the aggregation strategy software AS. This software AS uses the received parameter in order to optimize the aggregation strategy, as proposed in a parallel patent application of the patent applicant. The aggregation strategy software can adapt its parameter to the new traffic load situation. The aggregation strategy software AS generates a control signal CS, which is sent to a burst transmission unit BT in the hardware block HB, which sends the aggregated burst into a network or optical domain OD.

The average packet rate will be calculated pursuant to an example.

Suppose there is an OBS system with an edge node receiving traffic from an electrical or optical STM-1 link with IP packets inside the STM-1 Modules. Assuming a realistic distribution of packet sizes, like the tri-modal distribution, the average IP packet size aps is *aps*=3735*bits*. The measured time between the beginning of two successive bursts tbb, which are sent as optical bursts to a destination into the OBS network, is **tbb = 0.0069 seconds.** The burst contains **ppb = 200** IP packets.

According to Equation 2, the average IP packet rate is:

$$apr = \frac{ppb}{tbb} = \frac{200 \; packets}{0.0069s} = 28985,5 \; \frac{packets}{s}$$

The inter-arrival time iat is according to Equation 13 or 14:

$$iat = 3.4309 * 10^{-5} \; s$$

According to equation 15, the error in the measure is:

$$e = 5.8855 * 10^{-12} \; s^2$$

which is extremely low. With higher link speeds and/or more IP packets per burst, the error would be reduced even more.

**Claims**

1. A method for determining an average packet rate (apr) of incoming packets in a node of a network, wherein said incoming packets are aggregated to a burst, which is sent into the network, **characterized in that,** an average burst rate (abr) and a number of packets per burst (ppb) are measured and the average packet rate (apr) is determined by the product of the average burst rate (abr) and the number of packets per burst (ppb).

2. A method for determining an average packet rate (apr) of incoming packets in a node of a network,

wherein said incoming packets are aggregated to a burst, which is sent into the network,
**characterized in that,**
a time between the beginning of two successive bursts (tbb) and a number of packets per burst (ppb) are measured and the average packet rate (apr) is determined by the quotient of the average number of packets per burst (ppb) and the average time between the beginning of two successive bursts (tbb).

3. A method for determining an average packet rate (apr) of incoming packets in a node of a network,
wherein said incoming packets are aggregated according to an aggregation strategy with random selection to a burst and an aggregated packet marks the end of a burst or the beginning of a new burst with a probability (P),
**characterized in that,**
an average burst rate (abr) is measured and the average packet rate (apr) is determined by the average burst rate (abr) divided by the probability (P).

4. A method for determining an average packet rate (apr) of incoming packets in a node of a network,
wherein said incoming packets are aggregated according to an aggregation strategy with random selection to a burst and an aggregated packet marks the end of a burst or the beginning of a new burst with a probability (P),
**characterized in that,**
that the time between the beginning of two successive bursts (tbb) is measured and the average packet rate (apr) is determined by the reciprocal value of the product of the probability (P) and the time between the beginning of two successive bursts (tbb).

5. A method for determining an average packet rate (apr) of incoming packets in a node of a network,
wherein said incoming packets are aggregated according to an aggregation strategy with buffer limit to a burst, where said buffer has a buffersize (bs) and the packets have an average packet size (aps),
**characterized in that,**
an average burst rate (abr) is measured and the average packet rate (apr) is determined by the quotient of two terms, where the first term respectively dividend is the product of the buffer size (bs) and the average burst rate (abr) and the second term respectively divisor is the average packet size (aps).

6. A method for determining an average packet rate (apr) of incoming packets in a node of a network,
wherein said incoming packets are aggregated according to an aggregation strategy with buffer limit to a burst, where said buffer has a buffersize (bs) and the packets have an average packet size (aps),
**characterized in that**,
the time between the beginning of two successive bursts (tbb) is measured and the average packet rate (apr) is determined by the quotient of the buffer size (bs) divided by the product of the average packet size (aps) and the time between the beginning of two successive bursts (tbb).

7. A method for determining an approximated average packet rate (aapr) of incoming packets in a node of a network,
wherein said incoming packets are aggregated according to an aggregation strategy with timeout to a burst and the aggregating burst is sent after expiring of a time (T) into the network,
**characterized in that,**
a number of packets per burst (ppb) is measured and the approximated average packet rate (aapr) is determined by the quotient of the number of packets per burst (ppb) and the time (T).

8. A method for determining an average packet rate (apr) of incoming packets in a node of a network,
wherein said incoming packets are aggregated according to an aggregation strategy with timeout to a burst and the aggregating burst is sent after expiring of a time (T) into the network,
**characterized in that**,
a number of packets per burst (ppb) is measured and the average packet rate (apr) is determined by a quotient, where the dividend is the number of packets per burst (ppb) minus a first constant (a), which is in the range between 0,5 and 1,5, where the preferred value is 1, and where the divisor is the time (T).

9. A method for determining an approximated average packet rate (aapr) of incoming packets in a node of a network,
wherein said incoming packets with an average packet size (aps) are aggregated according to an aggregation strategy with timeout to a burst and the aggregating burst is sent after expiring of a time (T) into the network,
**characterized in that**,
an average burst size (abs) is measured and an approximated average packet rate (aapr) is determined by the quotient of the average burst size (abs) divided by the product of the average packet size (aps) and the timeout time (T).

**10.** A method for determining an average packet rate (apr) of incoming packets in a node of a network, wherein said incoming packets are aggregated according to an aggregation strategy with timeout to a burst and the aggregating burst is sent after expiring of a time (T) into the network,
**characterized in that**,
the time between the beginning of two successive bursts (tbb) is measured and the average packet rate (apr) is determined by the reciprocal value of the difference of the time between the beginning of two successive bursts (tbb) minus the time (T).

**11.** A method for determining an average packet rate (apr) of incoming packets in a node of a network, wherein said incoming packets are aggregated according to an aggregation strategy with timeout to a burst and the aggregating burst is sent after expiring of a time (T) into the network,
**characterized in that**,
an average burst rate (abr) is measured and the average packet rate (apr) is determined by the reciprocal value of a difference, where the minuend is the inverse value of the average burst rate (abr) and the subtrahend is the time (T).

**12.** The method as claimed in one of claims 1 to 11,
**characterized in that**,
an inter arrival time (iat) between incoming packets is determined by the reciprocal value or the average packet rate (apr) as determined in one of claims 1 to 11.

**13.** The Method as claimed in one of claims 1 to 12,
**characterized in that**,
an inter arrival time (iat) between incoming packets is periodically measured or determined according to claim 12, and that a stored average value (iat) of an old inter arrival time (iat) is periodically updated by a new inter arrival time (iat') through a summation of two terms, where the first term is a product of the old inter arrival time (iat) and a first update parameter (up1) and the second term is a product of the new inter arrival time (iat') and a second update parameter (up2).

**14.** The method as claimed in claim 13,
**characterized in that,**
the second update parameter (up2) is determined by the value one minus the first update parameter (up1), where said update parameters (up1, up2) are in the range between 0 and 1,0.

**15.** The method as claimed in claim 13 or 14,
**characterized in that,**
the value of the first update parameter (up1) is inverse proportional to the average number of packets per burst (ppb).

**16.** The method as claimed in one of claims 1 to 15,
**characterized in that,**
that IP packets are used as incoming packets.

**17.** The method as claimed in one of claims 1 to 16,
**characterized in that,**
the method is used in an Optical Burst Switched network.

**18.** The method as claimed in one of claims 1 to 17,
**characterized in that,**
that an edge node is used as node of the network.

**19.** The method as claimed in one of claims 1 to 18,
**characterized in that,**
that the burst is transformed and sent as optical burst into the Optical Burst Switched network.

# FIG 1

102

Aggregation Buffer

T

108

IP packets

Edge Node

Optical Burst

106

104

# FIG 2

202

Aggregation Buffer

208

IP packets

Optical Burst

206

Edge Node

204

# FIG 3

IPD

EN          OD

EP 1 511 230 A1

**European Patent Office**

**EUROPEAN SEARCH REPORT**

Application Number

EP 03 01 9469

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 699 346 A (VANDERVORT COLE S) 16 December 1997 (1997-12-16) | 1,2 | H04L12/56 |
| Y | * abstract * * column 4, line 65 - column 6, line 37 * * column 12, line 36 - column 15, line 40; claims 1-27 * | 3-19 | |
| Y | VOKKARANE V.M, HARIDOSS K, JUE, J.P: "Threshold-Based Burst Assembly Policies for QoS Support in Optical Burst-Switched Networks" PROCEEDINGS OF SPIE OPTICAL NETWORKING AND COMMUNICATIONS CONFERENCE (OPTICOMM) 2002, 2002, XP002269170 Boston, MA * the whole document * | 3-19 | |
| A | HU G, DOLZER K, GAUGER C.M (UNIVERSITY OF STUTTGART): "Does burst assembly really reduce the self-similarity?" PROCEEDINGS OF THE OPTICAL FIBER COMMUNICATIONS CONFERENCE AND EXPOSITION (OFC) 2003, 23 - 28 March 2003, XP002269169 Atlanta * the whole document * | 1-19 | **TECHNICAL FIELDS SEARCHED** (Int.Cl.7)<br><br>H04L |
| A | XIONG Y, VANDENHOUTE M, CANKAYA H.C: "Control Architecture in Optical Burst-Switched WDM Networks" IEEE JOURNAL ON SELECTED AREAS IN COMMUNICATIONS, VOL.18, NO.10, October 2000 (2000-10), XP002269171 * the whole document * | 1-19 | |
| A | US 6 597 660 B1 (DIAMOND JEFFREY E ET AL) 22 July 2003 (2003-07-22) * column 1, line 4 - line 52 * | 1-19 | |

The present search report has been drawn up for all claims

| Place of search | Date of completion of the search | Examiner |
|---|---|---|
| THE HAGUE | 2 March 2004 | Ciurel, C |

EPO FORM 1503 03.82 (P04C01)

**EP 1 511 230 A1**

## ANNEX TO THE EUROPEAN SEARCH REPORT
## ON EUROPEAN PATENT APPLICATION NO.

EP 03 01 9469

This annex lists the patent family members relating to the patent documents cited in the above-mentioned European search report.
The members are as contained in the European Patent Office EDP file on
The European Patent Office is in no way liable for these particulars which are merely given for the purpose of information.

02-03-2004

| Patent document cited in search report | | Publication date | Patent family member(s) | | Publication date |
|---|---|---|---|---|---|
| US 5699346 | A | 16-12-1997 | AU<br>CA<br>EP<br>WO | 1271997 A<br>2237986 A1<br>0861534 A1<br>9719535 A1 | 11-06-1997<br>29-05-1997<br>02-09-1998<br>29-05-1997 |
| US 6597660 | B1 | 22-07-2003 | CA<br>WO | 2276526 A1<br>9830059 A1 | 09-07-1998<br>09-07-1998 |

EPO FORM P0459

For more details about this annex : see Official Journal of the European Patent Office, No. 12/82